# EUROPÄISCHE PATENTSCHRIFT

(11) **EP 1 304 247 B1**
(45) Veröffentlichungstag und Bekanntmachung des Hinweises auf die Patenterteilung: **31.05.2006**
(21) Anmeldenummer: 02022076.0
(22) Anmeldetag: 02.10.2002
(51) Int. Cl.: B60J 7/057, B60J 7/12

(54) **Faltverdeck für ein Kraftfahrzeug**
Foldable roof for motor vehicle
Toit pliant pour véhicule

(30) Priorität: 20.10.2001 DE 20117270 U
(43) Veröffentlichungstag der Anmeldung: 23.04.2003
(73) Patentinhaber: Wilhelm Karmann GmbH, 49084 Osnabrück (DE)
(72) Erfinder: Gutendorf, Peter, 49088 Osnabrück (DE); Rethschulte, Dieter, 49525 Lengerich (DE); Esselmann, Christof, 48356 Nordwalde (DE)
(74) Vertreter: Ouzman, Beverley Nicola Claire

(56) Entgegenhaltungen:
- EP-A- 0 550 952
- EP-A- 0 881 468
- EP-A- 0 911 200
- EP-A- 0 940 280
- DE-A- 19 814 460

## Beschreibung

Die Erfindung betrifft ein Faltverdeck für ein Kraftfahrzeug mit den Merkmalen des oberbegriffs von Anspruch 1 und ein Fahrzeug mit solch einem Faltverdeck gemäß Anspruch 10.

Bei einem Cabriolet-Fahrzeug mit einem Faltverdeck, worunter vorliegend ganz allgemein ein öffnungsfähiges Dach verstanden werden soll, welches von einer an einem Windschutzscheibenrahmen anliegenden, geschlossenen Position in einen beispielsweise unter einem Verdeckkastendeckel befindlichen Stauraum in eine geöffnete Ablagestellung verlagerbar ist, verändern die Dachteile bzw. die Teile des Dachgestänges während der Öffnungs- bzw. Schließbewegung ihre Lage relativ zueinander und relativ zur Karosserie. Insbesondere zur Optimierung der Steuerung der Öffnungs- und Schließfunktion des Dachs ist es erforderlich, die genauen Positionen der einzelnen oder bestimmter Dach- oder Gestängeelemente während der Bewegungsphase möglichst genau zu kennen.

Aus der gattungsgemäßen EP 0550952 B1 ist ein Faltverdeck mit Drehpotentiometern zur Lagebestimmung während der Verdeckbewegung bekannt. Hierbei befindet sich jeweils ein Drehpotentiometer auf einer Drehachse von zwei relativ zueinander winkelbeweglichen Verdeck- bzw. Deckelteilen, so daß zu jedem Zeitpunkt der Verdeckbewegung die Lage des Dachs bestimmt werden und über den Antrieb regelnd auf die Dachablagebewegung eingewirkt werden kann.

Diese Lösung ist in mehrfacher Hinsicht nachteilig. Zunächst einmal ist man bei der Anbringung der Drehpotentiometer konstruktiv örtlich auf Drehachsen beschränkt, wobei die Drehpotentiometer ein gegen Feuchtigkeit und Staub abgedichtetes Gehäuse benötigen. Als mechanische Bauteile sind die Drehpotentiometer Verschleiß und Alterung unterworfen. Ferner ist für jeden Fahrzeugtyp (unterschiedliche Anzahl und Winkelverstellbereiche der Drehachsen) eine eigene Konstruktion notwendig. Eine weitere Schwierigkeit ergibt sich dadurch, daß eine Anzahl von Drehpotentiometern trotz Serienfertigung nicht miteinander identisch sind, was wiederum durch Justiermaßnahmen ausgeglichen werden muß.

Bekannt ist ferner die Verwendung von Endschaltern zur Erfassung der Endlage einer Bewegung bzw. Teilbewegung des Verdecks und der Dach- oder Gestängeelemente, wobei ein gravierender Nachteil einer solchen Lösung darin liegt, daß keinerlei Positionserfassung der Verdeckstellung während der Bewegungsphase des Dachs möglich ist. Auch ist die Anbringung von Mikroschaltern an Gestängeteilen (Anlenkung, Platzbedarf) nicht unproblematisch.

Die Aufgabe der Erfindung besteht darin, ein gattungsgemäßes Faltverdeck dahingehend zu verbessern, daß eine Lagemessung einzelner an der Bewegung des Dachs beteiligter Teile unabhängig vom Einbauort der Lagemeßeinrichtung sowie universell für jeden Fahrzeugtyp möglich ist.

Diese Aufgabe wird durch die Merkmale von Anspruch 1 gelöst.

Vorzugsweise ist vorgesehen, daß die Neigungssensoren als ein- oder zweiachsige Neigungssensoren ausgebildet sind.

Zweckmäßigerweise ist ein Neigungssensor der Karosserie zugeordnet. Es kann vorgesehen sein, daß in den Bewegungsablauf des Faltverdecks eingebundene bewegliche Fahrzeugteile, insbesondere Verdeckkastendeckel oder variable Verdeckwanne, mit einem Neigungssensor versehen sind.

Bevorzugt sind die Neigungssensoren durch Kleben befestigt.

Vorzugsweise ist vorgesehen, daß die Neigungssensoren nach einem thermodynamischen Prinzip arbeiten. Hierbei ist bevorzugt vorgesehen, daß die Neigungssensoren in einem abgeschlossenen Gasvolumen ein Heizelement und mindestens ein temperaturabhängiges Widerstandselement aufweisen.

Das Faltverdeck kann einen motorischen Antrieb und eine mit den Neigungssensoren verbundene Antriebssteuerung aufweisen.

Die Erfindung wird nachfolgend anhand eines Ausführungsbeispiels unter Bezugnahme auf eine Zeichnung erläutert, wobei
Fig. 1 in einer perspektivischen, schematischen Darstellung ein Kraftfahrzeug mit einem Faltverdeck in geschlossener Position zeigt, und
Fig. 2 die wesentlichen Komponenten des Faltverdecks des Fahrzeugs nach Fig. 1 zeigt.

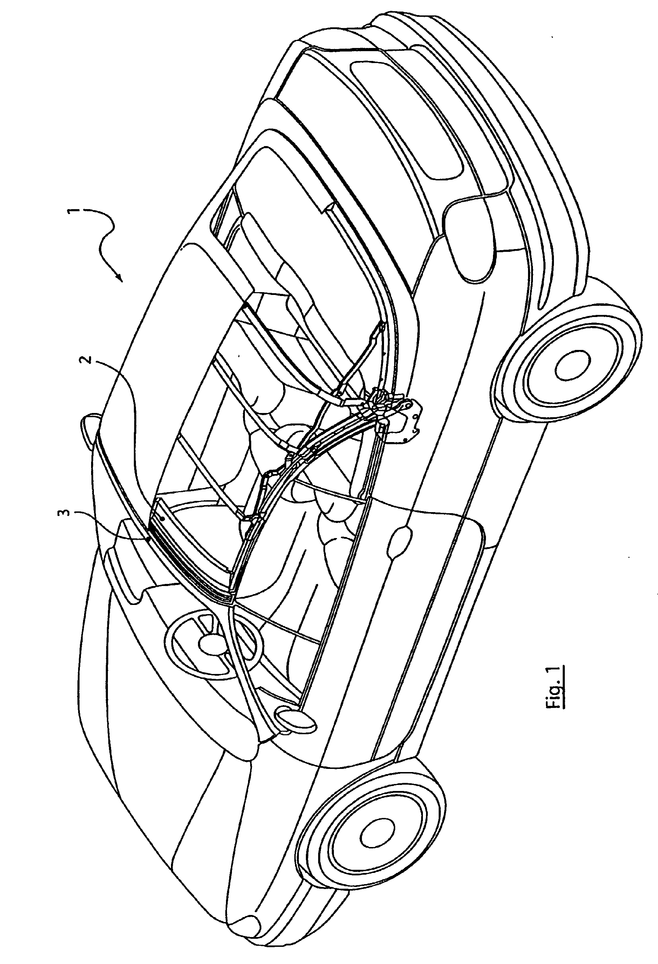

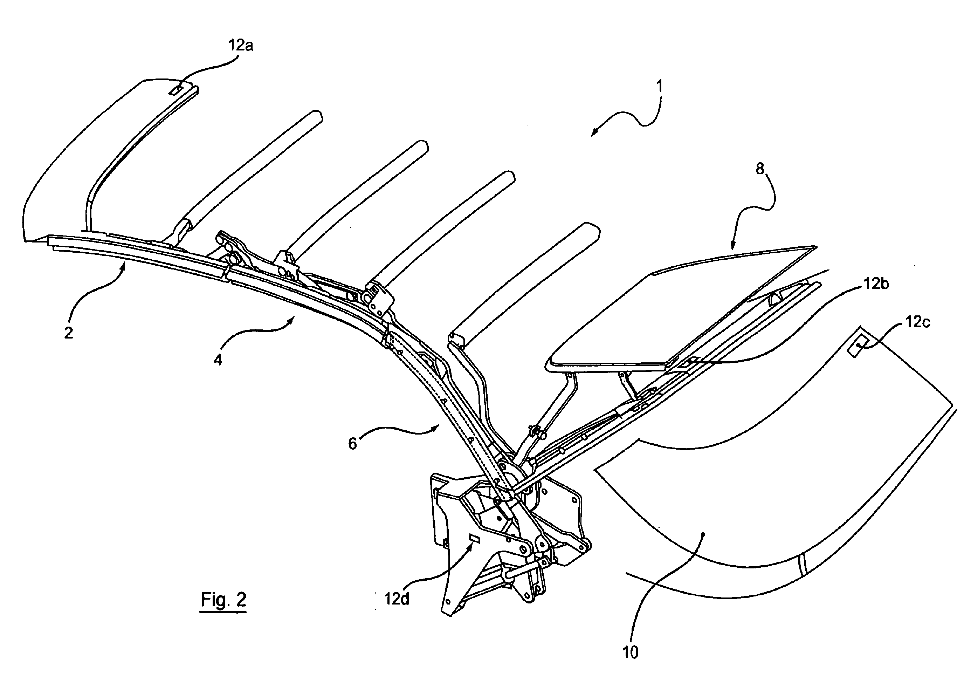

Das in Fig. 1 schematisch und perspektivisch dargestellte Fahrzeug ist mit einem im ganzen mit 1 bezeichneten Faltverdeck versehen, das im dargestellten geschlossenen Zustand mit einem vorderen Dachteil 2 an einem Windschutzscheibenrahmen 3 des Fahrzeugs anliegt. Das Faltverdeck weist drei zueinander bewegliche bzw. faltbare Dachteile auf, nämlich das genannte vordere Dachteil 2, ein mittleres Dachteil 4 und ein hinteres Dachteil 6, sowie ein Heckscheibenelement 8. Im geschlossenen Zustand wird das Faltverdeck in einem heckseitigen Verdeckkasten (nicht dargestellt) abgelegt, der mit einem nach hinten aufschwenkbaren Verdeckkastendeckel 10 abgedeckt ist, wie auch Fig. 2 zeigt.

Fig. 2 zeigt (halbseitig) das Faltverdeck 1 in einer Bewegungsphase kurz nach dem Öffnen bzw. vor dem Schließen des Dachs, wobei das Heckscheibenelement 8 nach oben geschwenkt und der Verdeckkastendeckel 10 geöffnet ist. Wie Fig. 2 weiter zeigt, sind auf unterschiedlichen Elementen des Faltverdecks bzw. diesem funktionsmäßig zugeordneten beweglichen Teilen Neigungssensoren angeordnet, nämlich ein erster Neigungssensor 12a auf dem vorderen Dachteil 2, ein zweiter Neigungssensor 12b auf dem Heckscheibenelement 8 sowie ein dritter Neigungssensor 12c auf dem Verdeckkastendeckel 10. Ein weiterer Neigungssensor 12d ist fest mit der Karosserie des Fahrzeugs verbunden, um ein Referenzsignal für die Fahrzeugneigung zu bilden.

Soweit zweckmäßig, könnte auch das mittlere Dachteil 4 und/oder das hintere Dachteil 6 mit einem eigenen Neigungssensor versehen sein. Zusätzlich oder alternativ zu den genannten Neigungssensoren an einzelnen Dachteilen bzw. Dachabschnitten könnten Neigungssensoren an ausgewählten Gestängeteilen fixiert sein, um für die Steuerung des Faltverdecks relevante Positionsinformationen zu liefern.

In einer bevorzugten Ausführungsform der Erfindung werden handelsübliche Neigungssensoren eingesetzt, die nach einem thermodynamischen Prinzip arbeiten. In einem abgeschlossenen Gasvolumen wird durch ein Heizelement eine konvektive Gasströmung hervorgerufen, die sich am (momentanen bzw. effektiven) Gravitations- bzw. Beschleunigungsfeld ausrichtet. Hochsensible temperaturabhängige Widerstandselemente erfassen die momentane, sie umgebende Gastemperatur. Jede Bewegung der Sensorstruktur (Neigung oder Beschleunigung) bewirkt ein Ungleichgewicht in den Widerstandselementen und ein entsprechendes elektrisches Signal, das durch eine elektronische Erfassungsschaltung auswertbar ist.

Die Neigungssensoren, im dargestellten Beispiel die Neigungssensoren 12a bis 12c, erfassen ihren Neigungswinkel (ein- oder zweiachsige Erfassung) gegenüber der Horizontalen, wobei der mit der Karosserie verbundene Neigungssensor (12d) etwaige Neigungen des Fahrzeugs kompensiert.

Die erfindungsgemäße Erfassung der "absoluten" Lage einzelner Dachteile oder Gestängeelemente bzw. sonstiger beweglicher Teile mittels Neigungssensoren bringt im Vergleich mit den bekannten Lagemeßeinrichtungen (z.B. Potentiometer oder Endschalter) erhebliche Vorteile mit sich. Zunächst einmal sind Neigungssensoren, die nach dem thermodynamischen Prinzip arbeiten, keinerlei mechanischem Verschleiß unterworfen, da keine beweglichen Teile vorhanden sind. Es bestehen keinerlei Dichtigkeitsprobleme, da keine Montage an Drehachsen erforderlich ist und somit keine Gehäuse mit mechanisch bewegbaren, hindurchreichenden Teilen vorhanden sind. Ferner sind Neigungssensoren beliebig an frei wählbaren Orten an Dach- oder Gestängeteilen bzw. Lenkern anbringbar, ohne daß konstruktive Änderungen am Dach erforderlich sind. Ein wesentlicher Vorteil besteht darin, daß ein fahrzeugtypenunabhängiger Einsatz möglich ist, wobei keine Anpassung von Fahrzeugteilen erforderlich ist. Schließlich müssen die Sensoren nur grob vorjustiert werden, da eine Feinjustierung mittels einer Software eines lernfähigen Steuergeräts möglich ist, wodurch auch ein kompletter Ausgleich von nie ganz zu vermeidenden Verdecktoleranzen möglich wird. Insbesondere die geringe Größe von Neigungssensoren und die Möglichkeit, diese in einfachster Weise durch Kleben an Verdeckbauteilen anzubringen, eröffnen einen universellen Einsatz.

### Bezugszeichenliste

- 1: Faltverdeck
- 2: vorderes Dachteil
- 3: Windschutzscheibenrahmen
- 4: mittleres Dachteil
- 6: hinteres Dachteil
- 8: Heckscheibenelement
- 10: Verdeckkastendeckel
- 12a - d: Neigungssensoren

## Patentansprüche

1. Faltverdeck (1) für ein Kraftfahrzeug,
- mit mindestens einem Dachelement (2, 4, 6, 8), das relativ zu einer Karosserie des Kraftfahrzeugs bewegbar ist, und
- mit einer Lagemesseinrichtung zum Erfassen der Position mindestens eines Dachelements über dessen Bewegungsbereich,
- wobei die Lagemesseinrichtung mindestens zwei Lageerfassungsmittel (12a, 12b, 12c, 12d) aufweist,
- von denen eines einem Dachelement (2, 4, 6, 8) und ein anderes entweder
- einem anderen Dachelement (2, 4, 6, 8) oder
- der Karosserie des Kraftfahrzeugs zugeordnet ist, **dadurch gekennzeichnet, daß**
1. die Lageerfassungsmittel (12a, 12b, 12c, 12d) als Neigungssensoren (12a, 12b, 12c, 12d) ausgebildet sind,
2. wobei einem Dachelement (2, 4, 6, 8) oder der Karosserie jeweils nur ein Neigungssensor (12a, 12b, 12c, 12d) zugeordnet ist, und
3. die Neigungssensoren (12a, 12b, 12c) jeweils ihren Neigungswinkel gegenüber der Horizontalen erfassen, wenn der Neigungssensor einem Dachelement (2, 4, 6, 8) zugeordnet ist,
4. bzw. ein Referenzsignal für die Fahrzeugneigung erfassen, wenn der Neigungssensor (12d) der Karosserie des Kraftfahrzeugs zugeordnet ist.

2. Faltverdeck nach Anspruch 1, **dadurch gekennzeichnet, daß** die Neigungssensoren als ein- oder zweiachsige Neigungssensoren (12a, 12b, 12c, 12d) ausgebildet sind.

3. Faltverdeck nach Anspruch 1 oder 2, **dadurch gekennzeichnet, daß** ein Neigungssensor (12d) der Karosserie zugeordnet ist.

4. Faltverdeck nach einem der vorangehenden Ansprüche, **dadurch gekennzeichnet, daß** in den Bewegungsablauf des Faltverdecks eingebundene bewegliche Fahrzeugteile, insbesondere Verdeckkastendeckel (10) oder variable Verdeckwanne, mit einem Neigungssensor (12c) versehen sind.

5. Faltverdeck nach einem der vorangehenden Ansprüche, **dadurch gekennzeichnet, daß** die Neigungssensoren (12a, 12b, 12c, 12d) durch Kleben befestigt sind.

6. Faltverdeck nach einem der Ansprüche 2 bis 5, **dadurch gekennzeichnet, daß** die Neigungssensoren (12a, 12b, 12c, 12d) nach einem thermodynamischen Prinzip arbeiten.

7. Faltverdeck nach Anspruch 6, **dadurch gekennzeichnet, daß** die Neigungssensoren in einem abgeschlossenen Gasvolumen ein Heizelement und mindestens ein temperaturabhängiges Widerstandselement aufweisen.

8. Faltverdeck nach einem der vorangehenden Ansprüche, **dadurch gekennzeichnet, daß** das Faltverdeck einen motorischen Antrieb und eine mit den Neigungssensoren (12a, 12b, 12c, 12d) verbundene Antriebs-Steuereinrichtung aufweist.

9. Faltverdeck nach einem der vorangehenden Ansprüche, **dadurch gekennzeichnet, dass** eine Feinjustierung der Neigungssensoren (12a, 12b, 12c, 12d) mittels einer Software eines lernfähigen Steuergeräts möglich ist.

10. Fahrzeug mit einem Faltverdeck nach einem der vorangehenden Ansprüche.

## Claims

1. A folding top (1) for a motor vehicle,
- with at least one roof element (2, 4, 6, 8) which is movable relative to a body of the motor vehicle, and
- with a location measuring device for detecting the position of at least one roof element over its range of movement,
- whereby the location measuring device has at least two location detection means (12a, 12b, 12c, 12d),
- of which one is associated with a roof element (2, 4, 6, 8) and another is associated either
- with another roof element (2, 4, 6, 8) or
- with the body of the motor vehicle,
**characterised in that**
1. the location detection means (12a, 12b, 12c, 12d) are formed as inclination sensors (12a, 12b, 12c, 12d),
2. whereby only one inclination sensor (12a, 12b, 12c, 12d) is respectively associated with a roof element (2, 4, 6, 8) or with the body, and
3. the inclination sensors (12a, 12b, 12c) each detect their angle of inclination in relation to the horizontal, if the inclination sensor is associated with a roof element (2, 4, 6, 8),
4. or detect a reference signal for the inclination of the vehicle, if the inclination sensor (12d) is associated with the body of the motor vehicle.

2. The folding top according to Claim 1, **characterised in that** the inclination sensors are formed as inclination sensors (12a, 12b, 12c, 12d) having one or two axes.

3. The folding top according to Claim 1 or 2, **characterised in that** an inclination sensor (12d) is associated with the body.

4. The folding top according to one of the preceding claims, **characterised in that** movable vehicle parts involved in the path of motion of the folding top, particularly the folding-top compartment lid (10) or variable folding-top tray, are provided with an inclination sensor (12c).

5. The folding top according to one of the preceding claims, **characterised in that** the inclination sensors (12a, 12b, 12c, 12d) are attached by means of gluing.

6. The folding top according to one of Claims 2 to 5, **characterised in that** the inclination sensors (12a, 12b, 12c, 12d) function in accordance with a thermodynamic principle.

7. The folding top according to Claim 6, **characterised in that** the inclination sensors have a heating element and at least one temperature-dependent resistance element in an enclosed gas volume.

8. The folding top according to one of the preceding claims, **characterised in that** the folding top has a motor drive and a drive control device which is connected to the inclination sensors (12a, 12b, 12c, 12d).

9. The folding top according to one of the preceding claims, **characterised in that** a fine adjustment of the inclination sensors (12a, 12b, 12c, 12d) is possible by means of software of an adaptive control apparatus.

10. A vehicle with a folding top according to one of the preceding claims.

## Revendications

1. Capote repliable (1) pour un véhicule automobile,
- avec au moins un élément de toit (2, 4, 6, 8), lequel peut se déplacer relativement à une carrosserie du véhicule automobile, et
- avec un transducteur de position pour détecter la position au moins d'un élément de toit sur l'étendue de déplacement de celui-ci,
- le transducteur de position comportant au moins deux moyens de détection de position (12a, 12b, 12c, 12d),
- dont un est associé à un élément parmi un élément de toit (2, 4, 6, 8) et un autre parmi soit
- un autre élément de toit (2, 4, 6, 8), soit
- la carrosserie du véhicule automobile,
**caractérisée en ce que**
1. les moyens de détection de position (12a, 12b, 12c, 12d) sont formés comme des capteurs d'inclinaison (12a, 12b, 12c, 12d),
2. seulement un capteur d'inclinaison (12a, 12b, 12c, 12d) étant associé à chaque élément parmi un élément de toit (2, 4, 6, 8) ou la carrosserie, et
3. les capteurs d'inclinaison (12a, 12b, 12c) détectent chacun leur angle d'inclinaison par rapport à l'horizontale, lorsque le capteur d'inclinaison est associé à un élément de toit (2, 4, 6, 8),
4. ou bien détecter un signal de référence pour l'inclinaison du véhicule, lorsque le capteur d'inclinaison (12d) est associé à la carrosserie du véhicule automobile.

2. Capote repliable selon la revendication 1, **caractérisée en ce que** les capteurs d'inclinaison sont formés comme des capteurs d'inclinaison mono- ou biaxiaux (12a, 12b, 12c, 12d).

3. Capote repliable selon la revendication 1 ou la revendication 2, **caractérisée en ce qu'**un capteur d'inclinaison (12d) est associé à la carrosserie.

4. Capote repliable selon l'une des revendications précédentes, **caractérisée en ce que**, dans le processus de déplacement de la capote repliable, des parties de véhicule mobiles intégrées, en particulier le couvercle de coffre à capote (10) ou bac à capote variable, sont munies d'un capteur d'inclinaison (12c).

5. Capote repliable selon l'une des revendications précédentes, **caractérisée en ce que** les capteurs d'inclinaison (12a, 12b, 12c, 12d) sont fixés par collage.

6. **Capote repliable selon l'une des revendications 2 à 5, caractérisée en ce que** les capteurs d'inclinaison (12a, 12b, 12c, 12d) fonctionnent selon un principe thermodynamique.

7. Capote repliable selon la revendication 6, **caractérisée en ce que** les capteurs d'inclinaison comportent, dans un volume de gaz fermé, un élément de chauffage et au moins un élément formant résistance variable avec la température.

8. Capote repliable selon l'une des revendications précédentes, **caractérisée en ce que** la capote repliable comporte un actionnement motorisé et un dispositif de commande à actionnement couplé aux capteurs d'inclinaison (12a, 12b, 12c, 12d).

9. Capote repliable selon l'une des revendications précédentes, **caractérisée en ce qu'**un réglage précis des capteurs d'inclinaison (12a, 12b, 12c, 12d) est possible au moyen d'un logiciel d'un organe de commande adaptatif.

10. Véhicule avec une capote repliable selon l'une des revendications précédentes.
